# EUROPEAN PATENT APPLICATION

(11) **EP 2 690 800 A1**
(43) Date of publication of application: **29.01.2014**
(21) Application number: 12765332.7
(22) Date of filing: 24.02.2012
(51) Int. Cl.: H04B 10/02, H04J 14/00, H04J 14/02

(54) **OPTICAL TRANSMISSION DEVICE**

(30) Priority: 25.03.2011 JP 2011067687
(71) Applicant: NEC Corporation, Tokyo 108-8001 (JP)
(72) Inventor: INOUE, Takanori, Tokyo 108-8001 (JP)
(74) Representative: Reeve, Nicholas Edward
(86) International application number: PCT/JP2012/054612
(87) International publication number: WO 2012/132688

(57) **Abstract**

An optical transmission apparatus according to the present invention includes: wave splitter (101) splitting an input optical signal into a plurality of wavelength bands; a plurality of optical switches (111 - 113) composed of optical shutters or variable optical attenuators that pass or shut off split optical signals corresponding to a plurality of optical signals split by wave splitter (101); optical coupler (120) combining optical signals that are output from the plurality of optical switches (111 - 113); and control section (130) setting up each of the plurality of optical switches (111 - 113), in which each of the plurality of optical switches is in a state of passing the split optical signals or in a state of shutting-off the split optical signals.

## Description

### TECHNICAL FIELD

The present invention relates to optical transmission apparatuses for use with optical communication systems.

### BACKGROUND ART

OADM (Optical Add/Drop Multiplexing) apparatuses used for ground optical communication networks have been applied to optical submarine cable systems. Thus, a variety of networks can be applied to optical submarine cable systems. However, in optical submarine cable systems, since the OADM function is performed by a branch apparatus laid on the seabed, if the configuration of an operating network is changed, the branch apparatus needs to be raised from the seabed to the land and then work such as replacement of existing optical filters with other ones corresponding to the changed network configuration needs to be performed.

Reconfigurable OADM (ROADM) apparatuses that can change the configuration of an operating network have been widely used for land optical communication networks. An ROADM apparatus that uses a WSS (Wavelength Selective Switch) is disclosed in JP2010-098545A Publication. The WSS is a wavelength selective device that has three functions of "wave splitting" that splits an input optical signal corresponding to wavelengths, "switching" that selects split optical signals, and "wave combining" that combines selected optical signals.

JP2002-262319A Publication discloses an optical path cross connect apparatus that uses an optical matrix switch that performs the switching function of the foregoing three functions. The technologies disclosed in these literatures can change the configuration of a network corresponding to wavelengths.

### SUMMARY OF THE INVENTION

If the switching function of the ROADM apparatus is accomplished by an optical matrix switch, since the number of selectable wavelengths is proportional to the number of switches, the manufacturing cost increases as the number of wavelengths increases.

In addition, since the structure of a wavelength selective device such as a WSS is complicated, if it is used for an ROADM apparatus, a problem such as the manufacturing cost increases occurs. Moreover, optical submarine cable systems needs to have a reliable their 25-year stable operation. However, if a wavelength selective device that has a complicated structure is used on the seabed, a problem such as the reliability decreases occurs.

An exemplary object of the invention is to provide reconfigurable optical transmission apparatuses that can be manufactured at lower costs and whose reliability is improved.

An optical transmission apparatus according to an exemplary aspect of the invention includes: a wave splitter splitting an input optical signal into a plurality of wavelength bands; a plurality of optical switches composed of optical shutters or variable optical attenuators that pass or shut off split optical signals corresponding to a plurality of optical signals split by the wave splitter; a first optical coupler combining optical signals that are output from the plurality of optical switches; and a control section setting up each of the plurality of optical switches, in which each of the plurality of optical switches is in a state of passing the split optical signals or in a state of shutting-off the split optical signals.

### BRIEF DESCRIPTION OF DRAWINGS

[Fig. 1] Fig. 1 is a block diagram showing an example of the structure of an optical submarine cable system according to an embodiment of the present invention.
[Fig. 2] Fig. 2 is a block diagram showing an example of the structure of an optical add/drop circuit shown in Fig. 1.
[Fig. 3] Fig. 3 is a block diagram showing an example of the structure of an ROADM circuit according to the embodiment of the present invention.
[Fig. 4] Fig. 4 is a block diagram showing an example of the structure of an ROADM circuit according to working example 1.
[Fig. 5] Fig. 5 is a block diagram showing an example of the structure of an ROADM circuit according to working example 2.
[Fig. 6] Fig. 6 is a block diagram showing an example of the structure of an ROADM circuit according to working example 3.
[Fig. 7] Fig. 7 is a block diagram showing an example of the structure of an ROADM circuit according to working example 4.

### DETAILED DESCRIPTION OF THE EXEMPLARY EMBODIMENT

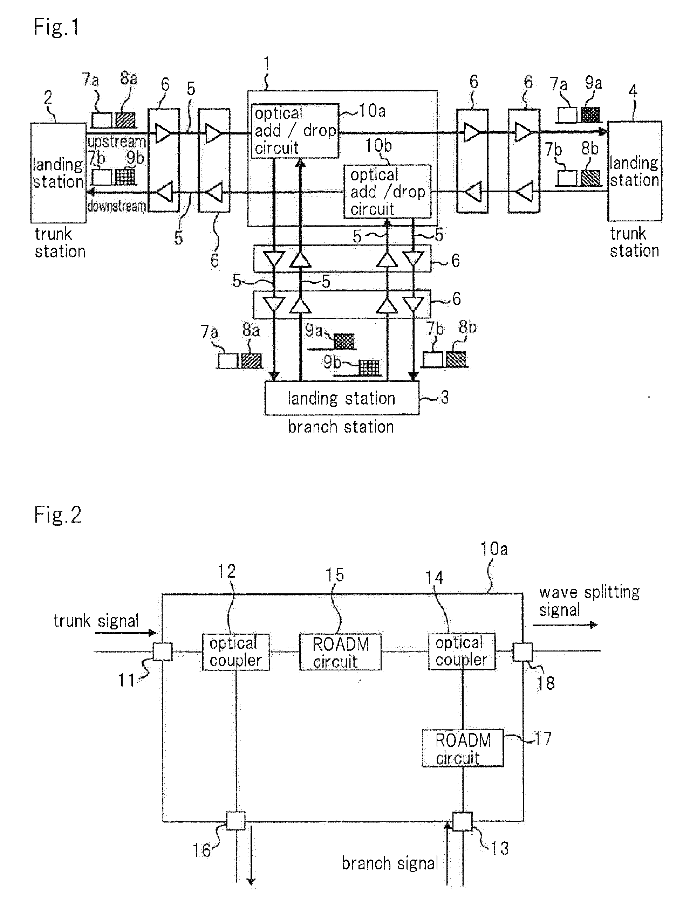

First, the structure of a communication system containing an optical add/drop branch apparatus according to an embodiment of the present invention will be described. Fig. 1 is a block diagram showing an example of the structure of an optical submarine cable system according to an embodiment of the present invention.

As shown in Fig. 1, the optical submarine cable system has landing stations 2 to 4 that transmit and receive optical signals; and optical add/drop branch apparatus 1 that transmits optical signals received from the landing stations. Optical add/drop branch apparatus 1 is located on the seabed and is connected to each of landing stations 2 to 4 located on the land through a submarine cable including transmission path 5. Landing station 2 and landing station 4 are oppositely located through optical add/drop branch apparatus 1 and are referred to as "trunk stations." Landing station 3 is branched from transmission path 5 that connects landing station 2 and landing station 4 and is referred to as "branch station." In the middle of transmission path 5, optical repeaters 6 that amplify optical signals and output the amplified optical signals are located so as to compensate for losses of optical signals in optical fibers over transmission path 5.

An optical signal transmitted from landing station 2 to optical add/drop branch apparatus 1 and an optical signal transmitted from landing station 4 to optical add/drop branch apparatus 1 are referred to as trunk signals. In the system shown in Fig. 1, it is assumed that a trunk signal transmitted from landing station 2 to optical add/drop branch apparatus 1 is split into two wavelength bands. An optical signal having a first wavelength band of the two split wavelength bands is referred to as trunk band signal 7a, whereas an optical signal having a second wavelength band thereof is referred to as drop band signal 8a. A trunk signal transmitted from landing station 4 to optical add/drop branch apparatus 1 is also split into two wavelength bands. An optical signal having a first wavelength band of the two split wavelength bands is referred to as trunk band signal 7b, whereas an optical signal having a second wavelength band thereof is referred to as drop band signal 8b.

An optical signal transmitted from landing station 3 to optical add/drop branch apparatus 1 is referred to as branch signal. Although a branch signal may be an optical signal having a plurality of wavelength bands like a trunk signal, according to this embodiment, for simplicity of the description, it is assumed that a branch signal has only the second wavelength band. A branch signal transmitted from landing station 3 to landing station 4 is referred to as add band signal 9a, whereas a branch signal transmitted from landing station 3 to landing station 2 is referred to as add band signal 9b.

As shown in Fig. 1, optical add/drop branch apparatus 1 has optical add/drop circuits 10a and 10b. Optical add/drop circuit 10a transmits a trunk signal received from landing station 2 to landing station 3. In addition, optical add/drop circuit 10a removes a part from the trunk signal received from landing station 2, combines a branch signal received from landing station 3 to the trunk signal, and then transmits the combined signal to landing station 4. In other words, referring to Fig. 1, when optical add/drop circuit 10a receives a trunk signal containing trunk band signal 7a and drop band signal 8a from landing station 2, optical add/drop circuit 10a transmits the trunk signal to landing station 3. In addition, optical add/drop circuit 10a removes drop band signal 8a from the trunk signal removed from landing station 2, combines add band signal 9a received from landing station 3 and trunk band signal 7a, and transmits the combined signal to landing station 4.

Optical add/drop circuit 10b transmits a trunk signal received from landing station 4 to landing station 3. In addition, optical add/drop circuit 10b removes a part from the trunk signal received from landing station 4, combines a branch signal received from landing station 3 to the trunk signal, and then transmits the combined signal to landing station 2. In other words, referring to Fig. 1, when optical add/drop circuit 10b receives a trunk signal containing trunk band signal 7b and drop band signal 8b from landing station 4, optical add/drop circuit 10b transmits the trunk signal to landing station 3. In addition, optical add/drop circuit 10b removes drop band signal 8b from the trunk signal received from landing station 4, combines add band signal 9b received from landing station 3 and trunk band signal 7b, and transmits the combined signal to landing station 2.

Next, the structures of optical add/drop circuits 10a and 10b shown in Fig. 1 will be described. Fig. 2 is a block diagram showing an example of the structure of optical add/drop circuit 10a shown in Fig. 2. Since the structure of optical add/drop circuit 10b is the same as that of optical add/drop circuit 10a, a detailed description of the structure of optical add/drop circuit 10b will be omitted.

Optical add/drop circuit 10a has optical coupler 12 that branches an optical signal; ROADM circuit 15 and ROADM circuit 17 that pass optical signals having predetermined wavelength bands; optical coupler 14 that combines optical signals having different wavelength bands; two input ports 11 and 13; and two output ports 16 and 18.

Input port 11 is connected to landing station 2 through transmission path 5 and inputs a trunk signal from landing station 2. Input port 13 is connected to landing station 3 through transmission path 5 and inputs a branch signal from landing station 3.

Optical coupler 12 branches a trunk signal received from landing station 2 through input port 11 into output port 16 and ROADM circuit 15. Optical coupler 14 combines optical signals received from ROADM circuit 15 and ROADM circuit 17 and transmits the combined optical signal to landing station 4 through output port 18.

When ROADM circuit 15 receives a trunk signal from optical coupler 12, ROADM circuit 15 passes an optical signal having a predetermined wavelength band of the trunk signal and transmits the passed optical signal to optical coupler 14. In optical add/drop circuit 10a shown in Fig. 1, ROADM circuit 15 transmits trunk band signal 7a to optical coupler 14. When ROADM circuit 17 receives a branch signal from landing station 3 through input port 13, ROADM circuit 17 passes an optical signal having a predetermined wavelength band of the branch signal and transmits the passed optical signal to optical coupler 14. In optical add/drop circuit 10a shown in Fig. 1, ROADM circuit 17 transmits add band signal 9a to optical coupler 14.

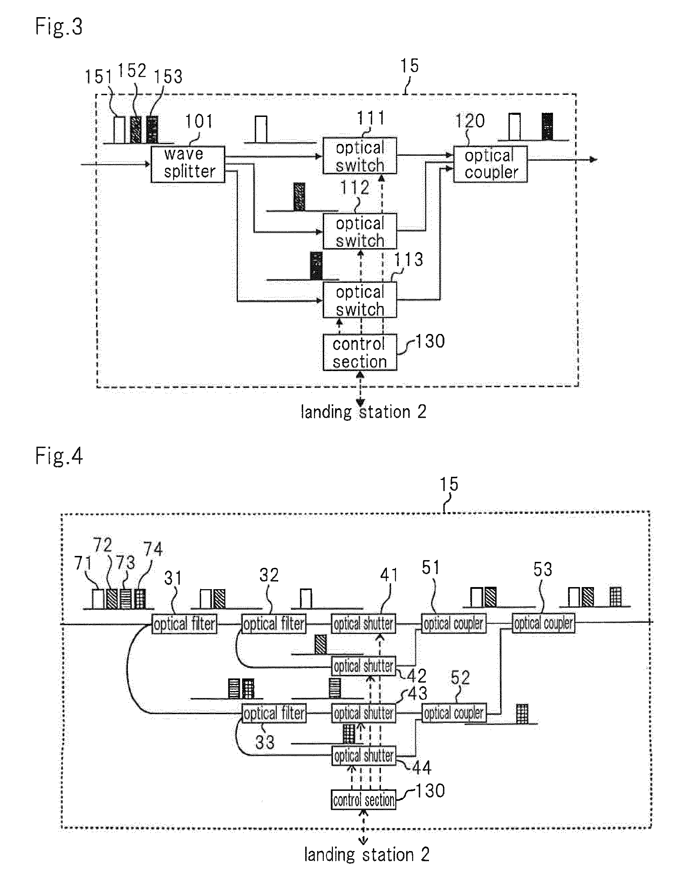

Next, the structures of ROADM circuits 15 and 17 shown in Fig. 2 will be described. ROADM circuits 15 and 17 correspond to the optical transmission apparatus according to this embodiment. Fig. 3 is a block diagram showing an example of the structure of ROADM circuit 15.

Since the structure of ROADM circuit 15 is the same as that of ROADM circuit 17, the structure of ROADM circuit 15 will be described. In addition, it is assumed that a trunk signal transmitted from landing station 2 to optical add/drop branch apparatus 1 is split into three wavelength bands. An optical signal having a first wavelength band of the three split wavelength bands is referred to as first band signal 151; an optical signal having a second wavelength band thereof is referred to as second band signal 152; and an optical signal having a third wavelength band thereof is referred to as third band signal 153.

ROADM circuit 15 has wave splitter 101 that splits an input optical signal into a plurality of wavelength bands; optical switches 111 to 113 that pass or shut off input optical signals; control section 81 that sets up each of optical switches 111 to 113, in which each of optical switches 111 to 113 is in a state of passing the input optical signals or in a state shutting-off the input optical signals; and optical coupler 120 that combines input optical signals.

Wave splitter 101 splits an input trunk signal into a first band signal, a second band signal, and a third band signal. Thereafter, wave splitter 101 transmits the first band signal to optical switch 111, the second band signal to optical switch 112, and the third band signal to optical switch 113.

Control section 130 is connected to landing station 2 through a signal line. When control section 130 receives a control signal to set up each of optical switches 111 to 113, in which each of optical switches 111 to 113 is in a state of passing an optical signal or in a state of shutting-off an optical signal, from landing station 2, control section 130 sets up each of optical switches 111 to 113, in which each of optical switches 111 to 113 is in a state of passing the optical signal or in a state of shutting-off the optical signal, according to the control signal. An example of the structure of control section 130 is a logic circuit that sets up on/off states for each of optical switches 111 to 113 corresponding to the control signal received from landing station 2. In the following description, the on state corresponds to "passing state," whereas the off state corresponds to "shut-off state."

Optical switches 111 to 113 are optical shutters or variable optical attenuators and pass or shut off input optical signals corresponding to on/off states set up by control section 130. Optical coupler 120 is a three-input one-output type wave combiner and outputs optical signals received from optical switches 111 to 113 to the outside. When optical coupler 120 receives optical signals having two or more wavelength bands from optical switches 111 to 113, optical coupler 120 combines these optical signals and outputs the combined optical signal to the outside.

According to this embodiment, control section 130 and landing station 2 are connected with a signal line. Alternatively, control section 130 may be connected to landing station 3 or landing station 4 or two or more landing stations. Like a power supply line to optical add/drop branch apparatus 1, a signal line that connects control section 130 and landing station 2 is located in a submarine cable along transmission path 5. In the structure shown in Fig. 3, an optical signal is split into three wavelength bands. Alternatively, an optical signal may be split into two wavelength bands. In this case, two optical switches need to be provided and optical coupler 120 needs to be a two-input one-output type wave combiner.

Next, the operation of ROADM circuit 15 shown in Fig. 3 will be described. In this example, it is assumed that control section 130 receives a control signal, that sets up each of optical switch 111 and optical switch 113 in a state of "passing" and that sets up optical switch 112 in a state of "shut-off", from landing station 2. Control section 130 turns on optical switch 111 and optical switch 113 and turns off optical switch 112 corresponding to the control signal.

When wave splitter 101 shown in Fig. 3 receives a trunk signal from optical coupler 12 shown in Fig. 2, wave splitter 101 transmits the first band signal to optical switch 111, the second band signal to optical switch 112, and the third band signal to optical switch 113. Optical switch 111 passes the first band signal received from wave splitter 101 and then transmits the first band signal to optical coupler 120. Optical switch 113 passes the third band signal received from wave splitter 101 and then transmits the third band signal to optical coupler 120. In contrast, optical switch 112 shuts off the second band signal received from wave splitter 101 and thereby does not transmit the second band signal to optical coupler 120. Optical coupler 120 transmits a combined signal of the first band signal received from optical switch 111 and the third band signal received from optical switch 113 to optical coupler 14 shown in Fig. 2.

In the optical transmission apparatus according to this embodiment, an input optical signal is split into a plurality of wavelength bands by the wave splitter, optical signals having desired wavelength bands are passed by the selective optical switches, the passed optical signals are combined by the optical coupler, and then the combined optical signal is transmitted. The structure of the apparatus is simplified, an optical signal is split into a plurality of wavelength bands rather than wavelengths, and optical signals to be transmitted are selected. As a result, while the manufacturing cost of the optical submarine cable system can be reduced, its reliability can be improved. Moreover, in the optical transmission apparatus according to this embodiment, the control section can change settings of the optical switches so as to reconfigure the network. In the following, working examples of the optical transmission apparatus according to this embodiment will be described.

### Working Example 1

According to this working example, wave splitter 101 shown in Fig. 3 is composed of a plurality of optical filters connected in a plurality of stages. Fig. 4 is a block diagram showing an example of the structure of the ROADM circuit according to this working example.

According to this working example, a trunk signal transmitted from landing station 2 to optical add/drop branch apparatus 1 is split into four wavelength bands. An optical signal having a first wavelength band of the four split wavelength bands is referred to as first band signal 71, an optical signal having a second wavelength band thereof is referred to as second band signal 72, an optical signal having a third wavelength band thereof is referred to as third band signal 73, and an optical signal having a fourth wavelength band thereof is referred to as fourth band signal.

ROADM circuit 15 shown in Fig. 4 has optical filters 31 to 33, optical shutters 41 to 44, control section 81, and optical couplers 51 to 53. Optical filters 31 to 33 correspond to wave splitter 101 shown in Fig. 3. Optical couplers 51 to 53 are two-input one-output type wave combiners.

Optical filters 31 to 33 are, for example, laminated dielectric filters, wave guide type splitters, or fiber Bragg grating type wave splitters. Optical filters 31 to 33 are reflection type optical filters each of which passes an optical signal having a predetermined wavelength band and reflects an optical signal having another wavelength band. Hereinafter, an optical signal that passes through an optical filter is referred to as passing signal, whereas an optical signal that is reflected by an optical filter is referred to as reflection signal.

Optical filter 32 is connected to optical filter 31 with a transmission path that transmits a passing signal of optical filter 31. Optical filter 33 is connected to optical filter 31 with a transmission path that transmits a reflection signal of optical filter 31. Optical filter 31 passes optical signal having a wavelength band which includes first band signal 71 and second band signal 72, but reflects optical signals having a wavelength band which includes third band signal 73 and fourth band signal 74. Optical filter 32 passes first band signal 71, but reflects second band signal 72. Optical filter 33 passes third band signal 73, but reflects fourth band signal 74.

Optical shutters 41 to 44 correspond to optical switches 111 to 113 shown in Fig. 3. Optical shutters 41 to 44 are for example mechanical optical switches using bulk type optical elements or optical fibers or electronic optical switches using for example electro-optical effect or electroabsorption effect. Whereas a passing signal of optical filter 32 is input to optical shutter 41 through a transmission path, a reflection signal of optical filter 32 is input to optical shutter 42 through a transmission path. Whereas a passing signal of optical filter 33 is input to optical shutter 43 through a transmission path, a reflection signal of optical filter 33 is input to optical shutter 44 through a transmission path.

Next, the operation of ROADM circuit 15 shown in Fig. 4 will be described. In this example, it is assumed that control section 130 receives a control signal that sets up optical shutters 41, 42, and 44 for "passing" and optical shutter 43 for "shut-off" from landing station 2. Control section 130 turns on optical shutters 41, 42, and 44 and turns off optical shutter 43 corresponding to the control signal.

When a trunk signal that is output from optical coupler 12 shown in Fig. 2 is input to optical filter 31, the trunk signal is split into optical signals having two wavelength bands by optical filter 31. The optical signal having one wavelength band is split into first band signal 71 and second band signal 72 by optical filter 32. The optical signal having the other wavelength band is split into third band signal 73 and fourth band signal 74 by optical filter 33.

Optical shutter 41 passes first band signal 71 and outputs it to optical coupler 51. Optical shutter 42 passes second band signal 72 and outputs it to optical coupler 51. Optical shutter 43 shuts off third band signal 73. Optical shutter 44 passes fourth band signal 74 and outputs it to optical coupler 52.

Optical coupler 51 combines first band signal 71 and second band signal 72 and outputs the combined signal to optical coupler 53. Optical coupler 52 transmits fourth band signal 74 to optical coupler 53. Optical coupler 53 combines first band signal 71, second band signal 72, and fourth band signal 74 and outputs the combined signal to optical coupler 14 shown in Fig. 2.

According to this working example, since the wave splitter is composed of optical filters that are connected in multiple stages, an ROADM circuit having a simple structure and high reliability can be realized. In addition, the number of split wavelength bands can be increased corresponding to the number of stages of the optical filters.

### Working Example 2

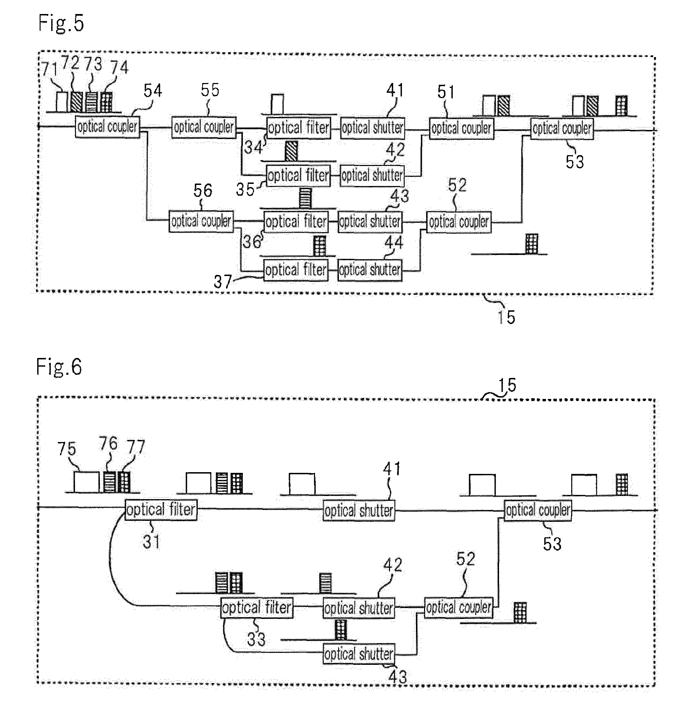

According to this working example, wave splitter 101 shown in Fig. 3 is composed of optical couplers and optical filters. Fig. 5 is a block diagram showing an example of the structure of the ROADM circuit according to this working example.

Like working example 1, according to working example 2, it is assumed that a trunk signal transmitted from landing station 2 to optical add/drop branch apparatus 1 is split into four wavelength bands.

As shown in Fig. 5, ROADM circuit 15 according to this working example has optical couplers 54 to 56, optical filters 34 to 37, optical shutters 41 to 44, and optical couplers 51 to 53. Optical couplers 54 to 56 and optical filters 34 to 37 correspond to wave splitter 101 shown in Fig. 3. Optical couplers 54 to 56 are one-input two-output type branching devices. According to this working example, control section 130 shown in Fig. 3 is also provided. Control section 130 and optical shutters 41 to 44 are connected with signal lines. However, control section 130 is not shown in Fig. 5.

Two output terminals of optical coupler 54 are connected to input terminals of optical couplers 55 and 56 through respective transmission paths. Two output terminals of optical coupler 55 are connected to input terminals of optical filters 34 and 35 through respective transmission paths. Two output terminals of optical coupler 56 are connected to input terminals of optical filters 36 and 37 through respective transmission paths.

Optical filters 34 to 37 are, for example, laminated dielectric filters, wave guide type splitters, or fiber Bragg grating type wave splitters. Optical filters 34 to 37 are absorption type optical filters that pass an optical signal having a predetermined wavelength band and that neither pass nor reflect an optical signal having another wavelength band. Hereinafter, an optical signal that passes through an optical filter is referred to as passing signal.

Optical filter 34 passes or shuts off first band signal 71. Optical filter 35 passes or shuts off second band signal 72. Optical filter 36 passes or shuts off third band signal 73. Optical filter 37 passes or shuts off fourth band signal 74.

Next, the operation of ROADM circuit 15 shown in Fig. 5 will be described. In this example, it is assumed that control section 130 receives a control signal that sets up optical shutters 41, 42, and 44 for "passing" and optical shutter 43 for "shut-off" from landing station 2. Control section 130 turns on optical shutters 41, 42, and 44 and turns off optical shutter 43 according to the control signal.

When a trunk signal that is output from optical coupler 12 shown in Fig. 2 is input to optical coupler 54, it branches the trunk signal into two optical couplers 55 and 56. The trunk signal that is input to optical coupler 55 is branched into optical filters 34 and 35. The trunk signal that is input to optical coupler 56 is branched into optical filters 36 and 37.

Optical filter 34 passes only first band signal 71 of input trunk signals and outputs first band signal 71 to optical shutter 41. Optical filter 35 passes only second band signal 72 of the input trunk signals and outputs second band signal 72 to optical shutter 42. Optical filter 36 passes only third band signal 73 of the input trunk signals and outputs third band signal 73 to optical shutter 43. Optical filter 37 passes only fourth band signal 74 of the input trunk signals and outputs fourth band signal 74 to optical shutter 44.

Optical shutter 41 passes first band signal 71 and outputs it to optical coupler 51. Optical shutter 42 passes second band signal 72 and outputs it to optical coupler 51. Optical shutter 43 shuts off third band signal 73. Optical shutter 44 passes fourth band signal 74 and outputs it to optical coupler 52. Since the operations of optical couplers 51 to 53 are the same as those of working example 1, their detailed description will be omitted.

According to working example 2, since the wave splitter is composed of optical couplers and optical filters instead of optical filters that are connected in multiple stages, a ROADM circuit having a simple structure and high reliability can be realized.

### Working Example 3

According to working example 2, an optical signal is split such that wavelength bands of transmitted optical signals become equal. According to working example 3, the widths of wavelength bands are not equal.

According to working example 3, in ROADM circuit 15 of working example 2, an optical signal is split into three wavelength bands. An optical signal having a first wavelength band of the three split wavelength bands is referred to as first band signal 75, an optical signal having a second wavelength band thereof is referred to as second band signal 76, and an optical signal having a third wavelength band thereof is referred to as third band signal 77. The width of the wavelength band of second band signal 76 is the same as that of third band signal 77. However, the width of the wavelength band of first band signal 75 is twice as large as that of second band signal 76.

Fig. 6 is a block diagram showing an example of the structure of a ROADM according to this working example. As shown in Fig. 6, ROADM circuit 15 has optical filters 31 and 33, optical shutters 41 to 43, and optical couplers 52 and 53. Optical filters 31 and 33 correspond to wave splitter 101 shown in Fig. 3. According to this working example, control section 130 shown in Fig. 3 is also provided. Control section 130 and optical shutters 41 to 43 are connected with signal lines. However, control section 130 is not shown in Fig. 6.

Like working example 1, optical shutters 41 to 43 pass or shut off input optical signals corresponding to on/off states that are set up by control section 130. Optical shutter 41 passes or shuts off first band signal 75. Optical shutter 42 passes or shuts off second band signal 76. Optical shutter 43 passes or shuts off third band signal 77.

Since this working example is the same as working example 1 except that the number of split wavelength bands of optical signals is three and that the width of the wavelength band of first band signal 75 is larger than that of each of other band signals, a detailed description of the operation of ROADM circuit 15 will be omitted.

According to working example 3, even if optical signals having different wavelength band widths are transmitted, an ROADM circuit having simple configuration and high reliability can be realized.

### Working Example 4

According to working example 4, in ROADM circuit 15 of working example 3, variable optical attenuators are used instead of optical shutters.

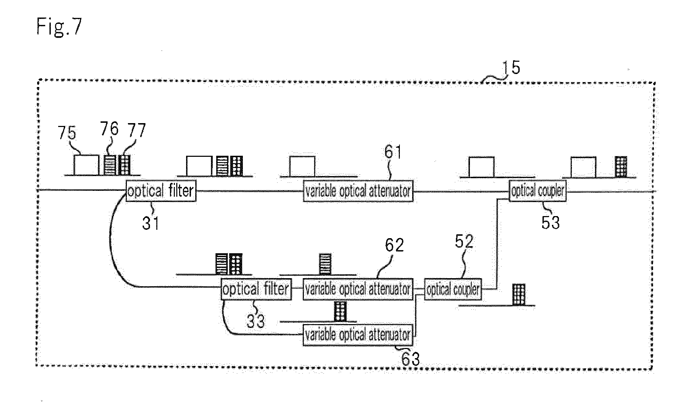

Fig. 7 is a block diagram showing an example of the structure of an ROADM circuit according to this working example. As shown in Fig. 7, ROADM circuit 15 has optical filters 31 and 33, variable optical attenuators 61 to 63, and optical couplers 52 and 53. Optical filters 31 and 33 correspond to wave splitter 101 shown in Fig. 3. According to this working example, control section 130 shown in Fig. 3 is also provided. Control section 130 and variable optical attenuators 61 to 63 are connected with signal lines. However, control section 130 is not shown in Fig. 7.

Variable optical attenuators 61 to 63 pass or attenuate input optical signals corresponding to on/off states that are set up by control section 130. Variable optical attenuator 61 passes or attenuates first band signal 75. Variable optical attenuator 62 passes or attenuates second band signal 76. Variable optical attenuator 63 passes or attenuates third band signal 77.

Since working example 4 is the same as working example 1 except that the number of split wavelength bands of optical signals is three, that the width of the wavelength band of first band signal 75 is larger than that of each of other band signals, and that the optical switches of ROADM circuit 15 are variable optical attenuators, a detailed description of the operation of ROADM circuit 15 will be omitted. In addition, working example 4 is the same as working example 2 except that part of the structure of working example 2 is changed. However, working example 4 may be applied to the foregoing embodiment and any one of the foregoing working examples.

According to this embodiment, since variable optical attenuators having optical shut off function instead of optical shutters are used for optical switches, an ROADM circuit having simple structure and high reliability can be realized. In addition, if the attenuation ratios of the variable optical attenuators are adjustable, the level differences of wavelength bands can be corrected.

As an exemplary advantage according to the invention, the manufacturing cost of a communication system that can change network configuration can be reduced and its reliability can be improved.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2011-067687 filed on March 25, 2011, the content of which is incorporated by reference.

### DESCRIPTION OF REFERENCE NUMERALS

- 1: Optical add/drop branch apparatus
- 2 to 4: Landing stations
- 10a, 10b: Optical add/drop circuits
- 15, 17: ROADM circuits
- 31 to 33: Optical filters
- 41 to 47: Optical shutters
- 51 to 53: Optical couplers
- 61 to 63: Variable optical attenuators
- 101: Wave splitter
- 111 to 113: Optical switches
- 120: Optical coupler
- 130: Control section

## Claims

1. An optical transmission apparatus, comprising:
a wave splitter splitting an input optical signal into a plurality of wavelength bands;
a plurality of optical switches composed of optical shutters or variable optical attenuators that pass or shut off split optical signals corresponding to a plurality of optical signals split by said wave splitter;
a first optical coupler combining optical signals that are output from said plurality of optical switches; and
a control section setting up each of said plurality of optical switches, in which each of said plurality of optical switches is in a state of passing said split optical signals or in a state of shutting-off said split optical signals.

2. The optical transmission apparatus according to claim 1,
wherein said wave splitter is a reflection type optical filter that passes an optical signal having a predetermined wavelength band of said input optical signal and reflects an optical signal having a wavelength band other than the predetermined wavelength band.

3. The optical transmission apparatus according to claim 2,
wherein said wave splitter has a structure in which said reflection type optical filters are connected in multiple stages.

4. The optical transmission apparatus according to claim 1,
wherein said wave splitter includes:
a second optical coupler branching said input optical signal; and
a plurality of absorption type optical filters, that are located between said second optical coupler and said plurality of optical switches corresponding to the plurality of optical switches, passing optical signals having different wavelength bands of optical signals branched by the second optical coupler.

5. The optical transmission apparatus according to any one of claims 1 to 4, wherein the band widths of said plurality of wavelength bands are not equal.
